Europäisches Patentamt

(19) European Patent Office

Office européen des brevets

(11) Numéro de publication: **0 107 598**
**B1**

# (12) FASCICULE DE BREVET EUROPEEN

(45) Date de publication du fascicule du brevet:
21.05.86

(51) Int. Cl.⁴: **B 32 B 27/18, C 09 K 21/00**

(21) Numéro de dépôt: 83420161.8

(22) Date de dépôt: 07.10.83

(54) Matériau composite et son application au renforcement des panneaux d'isolation.

(30) Priorité: 11.10.82 FR 8217333

(43) Date de publication de la demande:
02.05.84 Bulletin 84/18

(45) Mention de la délivrance du brevet:
21.05.86 Bulletin 86/21

(84) Etats contractants désignés:
BE CH DE GB IT LI NL

(56) Documents cités:
FR - A - 2 116 983
FR - A - 2 343 015
FR - A - 2 344 616
FR - A - 2 408 455
FR - A - 2 413 971

JOURNAL OF FIRE RETARDANT CHEMISTRY, vol. 8, no. 4, novembre 1981, pages 171-192, Technomic Publishing Co., Inc., Westport, US, T. HANDA et al.: "The synergistic effects of Sb203 and other metal oxide or hydroxide in plasticized flame retardant polypropylene and plasticized PVC"

(73) Titulaire: CEBAL, 98, boulevard Victor Hugo,
F-92115 Clichy (FR)

(72) Inventeur: Catrain, Yves, Rue du Fragnès Crolles,
F-38190 Brignoud (FR)
Inventeur: Guerrier, Claude, Cidex 145 Crolles,
F-38190 Brignoud (FR)
Inventeur: Revol, Jacques, 64, rue Georges V,
F-95600 Eaubonne (FR)

(74) Mandataire: Vanlaer, Marcel et al, PECHINEY 28, rue de Bonnel, F-69433 Lyon Cédex 3 (FR)

## Description

La présente invention est relative à un matériau composite difficilement combustible et à l'application de ce produit au renforcement des panneaux d'isolation.

Pour l'isolation thermique et/ou phonique des parois d'un bâtiment, on a recours le plus souvent à des panneaux formés d'une couche de fibres minérales relativement épaisse, qui exerce la fonction d'isolation proprement dite sur une paroi de laquelle est fixé un matériau d'épaisseur plus faible destiné à renforcer ladite couche et à donner ainsi aux pannaux une tenue mécanique convenable tout en protégeant les fibres contre les infiltrations d'humidité et de vapeur provenant du bâtiment.

Le matériau de renforcement peut être un produit tel que du papier, bitumé ou non, une matière plastique, un métal, un composé minéral ou toute armature de renforcement, qu'elle ait une surface continue ou soit disposée suivant un réseau à la manière d'un tissu. Le plus souvent, ce matériau résulte de l'association de plusieurs de ces produits entre eux, formant de ce fait, un matériau composite.

C'est ainsi qu'on connait depuis près de deux décennies, par le brevet français FR- A-1 320 684 "un panneau servant à recouvrir les faces d'un bâtiment et, en particulier, la toiture comportant notamment, d'une part, une couche isolante en fibres inorganiques de préférence en fibres de verre et un liant, de préférence, une résine synthétique, d'autre part, une couche de revêtement supplémentaire sous forme d'un panneau de construction légère, d'une feuille ou film de résine, métal ou analogue, de papier bitumé ou analogue. Ces éléments sont assemblés de façon permanente, de préférencé par collage".

Cependant, depuis cette époque, principalement en raison des exigences légales de plus en plus grandes en matière de securité contre l'incendie, l'homme de l'art a été amené, pour réaliser les panneaux d'isolation, soit à supprimer l'utilisation de matériaux d'origine organique, soit à chercher à réduire les propriétés ccmbustibles de ces derniers.

C'est pourquoi, dans la demande de brevet en République Fédérale Allemande, 2 460 508, pour éviter l'emploi de colles organiques facilement combustibles, on revendique un adhésif à base de silicates et d'oxydes métalliques comme moyen de fixation de la couche de fibres minérales isolante sur la feuille métallique servant de renforcement Certes, il s'agit là d'un progrès dans la voie de la résistance au feu. Toutefois, le recours à une simple feuille s'avère insuffisant pour mettre l'isolant à l'abri des déchirures inhérentes à des manipulations faites sans précautions. D'où, la nécessité de renforcer la tenue mécanique des panneaux par des matériaux composites.

C'est en vue d'obtenir ce renforcement, que la demande de brevet en R.F.A. 2 849 246 enseigne l'incorporation entre les fibres minérales isolantes et la feuille métallique d'une armature de feutre ou de tissu de verre et sa fixation par une colle à base de silicate. Les panneaux réalisés de cette façon possèdent évidemment une tenue mécanique et une incombustibilité améliorées. Pourtant, ils présentent certains inconvénients. En effet, les colles minérales utilisées pour fixer les fibres sur l'armature sont relativement fragiles et se prêtent mal aux déformations telles que l'enroulement ou le pliage, nécessitées par le conditionnement et le transport des panneaux. On peut remédier à ce défaut en fixant les fibres isolantes, d'une part, et l'ensemble feuille métallique-armature, d'autre part, sur les lieux mêmes où l'isolation est recherché, mais il faut alors que l'applicateur dispose d'installations d'encollage et de séchage servies par un personnel averti et consente à certains délais d'exécution. Autant de conditions qui ont pour effet de grever fortemant le prix de revient des panneaux.

C'est pour éviter certains de ces ennuis que le brevet en R.F.A. 3 013 223 préconise l'utilisation d'une autre feuille métallique placée directement en contact avec les fibres isolantes, de sorte qu'on supprime le problème de la fixation directe de l'armature sur lesdites fibres. Une telle conception présente, en outre, l'avantage de permettre l'utilisaticn d'armatures à base de fibres et de colles organiques, car ces produits étant enfermées entre deux feuilles métalliques, se trouvent alors à l'abri de tout contact avec une flamme éventuelle. Un tel matériau nécessite cependant le doublement de la quantité de métal, ce qui entraine forcément un accroissement du prix de revient et n'évite pas les opérations d'encollage peu pratiques.

Pour écarter les problèmes d'encollage, certaines techniques recourent à l'imprégnation de l'armature par une résine thermofusible, de sorte que la fixation ultérieure du matériau composite formée par cette armature et la feuille métallique sur la couche isolante, peut être réalisée facilement et rapidement sur les lieux d'utilisation par simple chauffage du matériau dans une calandre. En effet, dans ces conditions, on provoque un ramollissement de la résine qui lui procure des propriétés adhésives convenables et assure une fixation correcte après refroidissement. Toutefois, on retrouve les désavantages des produits organiques en ce qui concerne la tenue au feu. Certes, on peut revenir à la solution de la double feuille métallique en faisant fi du prix de revient, mais alors on ne peut plus benéficier des avantages du calandrage.

C'est pourquoi, la demanderesse, consciente que des progrès étaient encore possible dans la conception des panneaux d'isolation, a cherché et trouvé un matériau composite dont la fixation sur une couche isolante peut être effectuée par celandrage et dans lequel on remédie aux inconvénients dùs à la mauvaise tenue au feu des résines thermofusibles.

Dans ce matériau selon l'invention, on associe une feuille d'aluminium et une armature de renforcement au moyen d'une composition thermofusible qui contient dans une proportion de 70 à 90 % en poids un groupe d'agents ignifugeants.

On retrouve donc les éléments connus de l'art antérieur, à savoir :

- une feuille d'aluminium, d'épaisseur comprise entre 10 et 50 μm dont le rôle essentiel est d'empécher l'humidité ou les vapeurs des installations à protéger de pénétrer dans la couche de fibres minérales des panneaux d'isolation, ce qui réduirait leurs propriétés isolantes;

- une armature de renforcement formée par un tissu de fils mono ou, multifibres en verre et/ou en matière organique telle que les polyesters de diamètre voisin de 0,1 mm et formant, par exemple, des mailles de géométrie différente et de dimensions voisines du centimètre. Cette armature a pour objet de mettre la couche de fibres isolantes à l'abri de toutes les sollicitations extérieures dommageables qui peuvent se produire notamment lors des manipulations qui accompagnent le conditionnement, le transport et la mise en place des panneaux.

Ces éléments sont associés entre eux par une composition thermofusible appartenant, de préférence, au groupe constitué par les copolymères d'éthylène, tel que par exemple, l'éthylène-acétate de vinyle, le polypropylène, les copolymères de polypropylène, mais tout autre composition thermofusible peut être mise en oeuvre.

Selon l'invention, cette composition renferme un groupe d'agents ignifugeants parmi lesquels on trouve, pris soit séparément, soit en ccmbinaison, des dérivés organiques chlorés, des dérivés aromatiques bromés, des charges minérales, des antioxydants. Les choix sont faits parmi ces agents en fonction de leur prix et de leur disponibilité sur le marché.

Pourtant, certains groupes d'agents ignifugeants se sont avérés capables de développer un effet synergétique remarquable au niveau de leurs propriétés ignifugeantes. Il en est ainsi, par exemple, pour le groupe constitué par une paraffine chlorée, le décabromodiphényle, une charge minérale composée d'hydrate d'aluminium et de trioxyde d'antimoine et un antioxydant,qui s'est révélé réfractaire au feu à tel point qu'il répond aux exigences les plus grandes en matière de sécurité contre l'incendie telles que, par exemple, celles imposées en R.F.A. à de tels produits pour figurer dans la classe A₂ selon la DIN 4102.

Pratiquement, la réalisation de ce matériau a lieu de la façon suivante : à la composition thermofusible maintenue à l'état fondu, on ajoute les agents ignifugeants en les dispersant par agitation; puis, on introduit simultanément et au défilé dans le bain ainsi formé la feuille d'aluminium et l'armature de renforcement, qui se recouvrent progressivement d'un film de composition ignifugée; on applique ensuite les éléments ainsi enduits l'un contre l'autre au moyen d'un dispositif adéquat et, après refroidissement, on obtient le matériau composite.

Outre la remarquable tenue au feu, l'expérience montre que la présence d'agents ignifugeants n'altère pas du tout les caractéristiques de souplesse et d'élasticité des compositions thermofusibles et que le matériau se prête facilement à toutes les opérations d'enroulement, de pliage permettant son conditionnement sous des formes variées. De même, les propriétés d'adhérence de la composition thermofusible sont maintenues de sorte que le matériau composite ainsi formé peut se fixer facilement sur une couche de fibres minérales isolantes par simple chauffage au moyen d'une calandre.

Ainsi, au lieu de recourir à des encolleuses, dispositifs complexes, qui ont des cadences de production relativemant faibles en raison des délais nécessaires à l'imprégnation et au séchage, il suffit de faire passer le matériau selon l'invention entre des cylindres chauffés de façon adéquate pour provoquer une fusion rapide de la composition thermofusible et assurer par contact avec la couche isolante et refroidissement, une fixation quasi instantanée.

Une telle opération peut être effectuée directement sur les lieux d'utilisation des panneaux, la calandre étant un appereil facilement manceuvrable par un personnel n'ayant pas de qualification particulière.

Les panneaux ainsi conçus présentent donc les avantages inhérents au procédé de fixation par thermofusion, sans avoir les défauts de toute matière plastique d'être àssez facilement combustible.

Le matériau composite selon l'invention trouve donc son application dans la fabrioation de penneaux d'isolation phonique et thermique destinés à l'industrie du bâtiment et pour lesquels on exige à la fois de bonnes propriétés mécaniques et une tenue au feu répondant aux normes de sécurité les plus exigeantes telles que la norme A₂ en vigueur en Allemagne Fédérale.

Cette application peut être étendue, en raison de la souplesse du matériau, à la confection de manchons destinés à isoler les tuyauteries des effets ambiants et de tout autre pièce isolante s'adeptant aux formes d'installation les plus complexes.

## Revendications

1 - Matériau composite difficilement combustible et fixable sur des panneaux d'isolation par calandrage dans lequel on associe une feuille d'aluminium et une armature de renforcement formée par un tissu au moyen d'une composition thermofusible, caractérisé en ce que 70 à 90% de la composition thermofusible sont constitués par un groupe d'agents ignifugeants.

2 - Matériau selon la revendication 1, caractérisé en ce que le groupe d'agents ignifugeants contient un dérivé organique chloré.

3 - Matériau selon la revendication 1, caractérisé en ce que le groupe d'agents ignifugeants contient un dérivé aromatique bromé.

4 - Matériau selon la revendication 1, caractérisé en ce que le groupe d'agents ignifugeants contient une charge minérale.

5 - Matériau selon la revendication 1, caractérisé en ce que le groupe d'agents ignifugeants contient un antioxydant.

6 - Matériau selon la revendication 2, caractérisé en ce que le dérivé organique est une paraffine.

7 - Matérieau selon la revendication 3, caractérisé en ce que le dérivé aromatique bromé est le décabromodiphényle.

8 - Matériau selon la revendication 4, caractérisé en ce que la charge minérale est à base d'hydrate d'aluminium et de trioxyde d'antimoine.

9 - Matériau selon la revendication 1, caractérisé en ce que les 10 à 30% en poids restants de la composition thermofusible appartiennent au groupe constitué par les copolymères d'éthylene, le polypropylène, les copolymères de propylène.


**Patentansprüche**

1. Schwer brennbares, auf Isolierplatten durch Kalandrieren befestigbares Verbundmaterial, in dem eine Aluminiumfolie und eine aus einem Gewebe gebildete Verstärkungsbewehrung mittels einer wärmeschmelzbaren Zusammensetzung verbunden werden, dadurch gekennzeichnet, daß 70 bis 90 % der wärmeschmelzbaren Zusammensetzung aus einer Gruppe von flammwidrigen Stoffen bestehen.

2. Material nach Anspruch 1, dadurch gekennzeichnet, daß die Gruppe von flammwidrigen Stoffen ein chlorhaltiges organisches Derivat enthält.

3. Material nach Anspruch 1, dadurch gekennzeichnet, daß die Gruppe von flammwidrigen Stoffen ein bromhaltiges aromatisches Derivat enthält.

4. Material nach Anspruch 1, dadurch gekennzeichnet, daß die Gruppe von flammwidrigen Stoffen einen mineralischen Füllstoff enthält.

5. Material nach Anspruch 1, dadurch gekennzeichnet, daß die Gruppe von flammwidrigen Stoffen einen Oxidationsinhibitor enthält.

6. Material nach Anspruch 2, dadurch gekennzeichnet, daß das organische Derivat ein Paraffin ist.

7. Material nach Anspruch 3, dadurch gekennzeichnet, daß das bromhaltige aromatische Derivat das Dekabromdiphenyl ist.

8. Material nach Anspruch 4, dadurch gekennzeichnet, daß der mineralische Füllstoff auf Basis von Aluminiumhydrat und Antimontrioxid ist.

9. Material nach Anspruch 1, dadurch gekennzeichnet, daß die restlichen 10 bis 30 Gewichtsprozent der wärmeschmelzbaren Zusammensetzung zu der Gruppe gehören, die aus den Ethylencopolymeren, dem Polypropylen, den Propylencopolymeren besteht.


**Claims**

1. A composite material which cannot be turnt easily and which can be fixed on insulating panels by calendering, wherein a sheet of aluminium and a reinforcing support means formed by a fabric are associated by means of a thermofusible composition characterised in that 70 to 90% of the thermofusible composition are formed by a group of fireproofing agents.

2. A material according to claim 1 characterised in that the group of fireproofing agents contains an organic chlorinated derivative.

3. A material according to claim 1 characterised in that the group of fireproofing agents contains an aromatic brominated derivative.

4. A material according to claim 1 characterised in that the group of fireproofing agents contains a mineral filler.

5. A material according to claim 1 characterised in that the group of fireproofing agents contains an anti-oxidising agent.

6. A material according to claim 2 characterised in that the organic derivative is a paraffin.

7. A material according to claim 3 characterised in that the aromatic brominated derivative is decabromodiphenyl.

8. A material according to claim 4 characterised in that the minerai filler is based on aluminium hydrate and antimony trioxide.

9. A material according to claim 1 characterised in that the remaining 10 to 30% by weight of the thermofusible composition belong to the group formed by the copolymers of ethylene, polypropylene, and the copolymers of propylene.